# EUROPEAN PATENT APPLICATION

(11) **EP 4 811 846 A1**
(43) Date of publication of application: **23.09.2026**
(21) Application number: 26160253.6
(22) Date of filing: 24.02.2026
(51) Int. Cl.: H04W 16/14, H04W 24/02

(54) **NETWORK SURVEYING**

(30) Priority: 18.03.2025 GB 202503943
(71) Applicant: Wavemobile Limited, Richmond, Surrey TW9 1RB (GB)
(72) Inventor: TIMSON, Anthony, Richmond, TW9 1RB (GB)
(74) Representative: EIP

(57) **Abstract**

A method includes transmitting a first downlink signal in a first frequency band and conveying system conveying system information indicating a first PLMN via a base station apparatus, receiving an area update request from a mobile device via the base station apparatus, performing an area update procedure to register the mobile device with the first PLMN, transmitting one or more messages to the mobile communication device via the base station apparatus to cause the mobile communication device to provide measurement data indicative of reception of one or more downlink signals by the mobile communication device within one or more frequency bands different to the first frequency band, receiving the measurement data from the mobile device via the base station apparatus, and using the received measurement data to assess availability of one or more PLMNs different from the first PLMN in a region of coverage of the base station apparatus.

## Description

### Technical Field

The present invention relates to surveying a region for availability of one or more public land mobile networks.

### Background

Mobile network operators aim to provide cellular coverage over defined regions, for example entire countries or states. However, the distribution of cell sites required to provide high quality cellular coverage over the entirety of a large region can be impracticable or financially unviable. The issue of incomplete coverage may be exacerbated by the fact that mobile network operators may not allow their subscribers to access services of competitor networks. It may nevertheless be desirable to provide cellular services in particular regions of interest where a home network has marginal or no cellular coverage ("not spots"), for example in the vicinity of a premises or facility in a remote location.

Independent networks may be set up to provide cellular services in not spots. However, large portions of the radio spectrum ("spectrum") are licensed to network operators, such as national mobile operators, on a national or otherwise wide geographic basis, meaning that independent network operators may be prevented from accessing spectrum that is otherwise unused. Spectral sharing principles may be applied to alleviate this issue. For example, the United Kingdom's spectrum sharing framework of 2019 allows operators to apply for Local Access Licences (LAL) which enable time-limited access to unused spectrum licenced to national mobile operators. A similar approach is being promoted by the European Union, and considered by other administrations.

In order to apply for a licence to use spectrum within a given area, an aspiring or existing network operator may be required to provide evidence that the spectrum is not being used within the area. Furthermore, the aspiring or existing network operator may be expected to implement technical measures (for example, limiting transmission power) to ensure that the proposed network does not interfere with the operation of other networks.

### Summary

According to a first aspect, there is provided a system including a base station apparatus, a network node communicatively coupled to the base station apparatus, and a data processing system communicatively coupled to the network node. The base station apparatus is arranged to transmit a first downlink signal in a first frequency band conveying system information indicating a first public land mobile network (PLMN). The network node is arranged to perform operations including receiving an area update request via the base station apparatus from a mobile communication device having a home network that differs from the first PLMN, performing an area update procedure to register the mobile communication device with the first PLMN, transmitting one or more messages to the mobile communication device via the base station apparatus to cause the mobile communication device to provide measurement data indicative of reception of one or more downlink signals by the mobile communication device within one or more frequency bands different to the first frequency band, and receiving the measurement data from the mobile device via the base station apparatus. The data processing system is arranged to assess, using the received measurement data, availability of one or more PLMNs different from the first PLMN in a region of coverage of the base station apparatus.

By repurposing the measurement process, which is typically used to assess cell reselection criteria during handovers or cell reselection, the method enables automatic surveying of the region of coverage of the base station apparatus. The information collected from the surveying may be used for example to determine that a given frequency band is not being used in the region, and to provide evidence of this lack of use, which may in turn facilitate spectrum sharing in the region. For example, the data processing system may be arranged to generate a report indicative of the availability of the one or more PLMNs different from the first PLMN in the region of coverage of the base station apparatus, which may be provided as evidence of unused spectrum for a LAL application.

The operations may include, responsive to the data processing system determining that the home network of the mobile communication device is available in the region of coverage of the base station apparatus, terminating the registration of the mobile communication device with the first PLMN. In this way, unwanted interference by the base station apparatus with the mobile communication device can be mitigated or prevented, enabling the first PLMN to coexist peacefully with the home network. Terminating the registration may include transmitting a layer two message and/or a layer three message to the mobile communication device via the base station apparatus.

The operations may include receiving respective further measurement data from each of a plurality of further mobile communication devices via the base station apparatus indicative of reception of downlink signals within the indicated one or more frequency bands by each of the plurality of further mobile communication devices. Assessing of the availability of the one or more PLMNs different from the first PLMN may then further use the respective measurement data from each of the plurality of further mobile communication devices.

The network node may be configured to provide the neighbour list is to the mobile communication device during the area update procedure. Additionally, or alternatively, the operations may include causing the mobile communication device to transmit a plurality of measurement reports over a period of time during which the mobile communication device is registered with the first PLMN, and the measurement data may be derived from the plurality of measurement reports. In this way, a potentially large portion of the region of coverage may be scanned by a single mobile communication device as the user of the device moves around the region.

The mobile communication device may be in an idle state prior to transmitting the area update request. The operations may include paging the mobile communication device while in the idle state to cause the mobile communication device to transmit the measurement data. By contrast, measurement information is usually provided to a network when the mobile device is in a connected state, in order to facilitate handovers.

Performing the area update procedure may include authenticating the mobile communication device with the home network of the mobile communication device, thereby to enable provision of communication services to the mobile communication device via the first PLMN.

The base station apparatus may be an eNodeB configured in accordance with the Long-Term Evolution (LTE) standard also known as 4G, in which case the network node may include a mobility management entity (MME), and the area update procedure may be a tracking area update (TAU) procedure. Alternatively, the method may be applied to other radio access technologies (RATs) such as Global System for Mobile Communications (GSM), Universal Mobile Telecommunications System (UMTS), and/or 5G New Radio (NR). The network node may include a mobile switching centre, and the area update procedure may be a location area update (LAU) procedure. In the case of 4G and 5G, the neighbour list may be provided in a system information block (SIB)-5 message.

According to further aspects, there are provided a computer-implemented method, a computing system with means for carrying out the method, and a computer program product (such as one or more non-transitory storage media) comprising instructions which, when executed by a computing system communicatively coupled to a base station apparatus, cause the computing system to carry out the method.

The method includes transmitting a first downlink signal in a first frequency band via a base station apparatus conveying system conveying system information indicating a first PLMN, receiving an area update request via the base station apparatus from a mobile communication device with a home network of the mobile communication device that differs from the first PLMN, performing an area update procedure to register the mobile communication device with the first PLMN, transmitting one or more messages to the mobile communication device via the base station apparatus to cause the mobile communication device to provide measurement data indicative of reception of one or more downlink signals by the mobile communication device within one or more frequency bands different to the first frequency band, receiving the measurement data from the mobile device via the base station apparatus, and assessing availability of one or more PLMNs different from the first PLMN in a region of coverage of the base station apparatus using the received measurement data.

Further features and advantages of the invention will become apparent from the following description of preferred embodiments of the invention, given by way of example only, which is made with reference to the accompanying drawings.

### Brief Description of the Drawings

Figure 1 shows schematically a system for assessing availability of one or more public land mobile networks (PLMNs) in a given geographical region.
Figure 2 is a schematic flow diagram showing a method of assessing availability of one or more PLMNs in a given geographical region.

### Detailed Description

Details of systems and methods according to examples will become apparent from the following description with reference to the figures. In this description, for the purposes of explanation, numerous specific details of certain examples are set forth. Reference in the specification to 'an example' or similar language means that a feature, structure, or characteristic described in connection with the example is included in at least that one example but not necessarily in other examples. It should be further noted that certain examples are described schematically with certain features omitted and/or necessarily simplified for the ease of explanation and understanding of the concepts underlying the examples.

Embodiments of the present disclosure relate to determining availability of public land mobile networks (PLMNs) in a region of interest. In particular, embodiments address challenges associated with manually surveying the region for downlink signals.

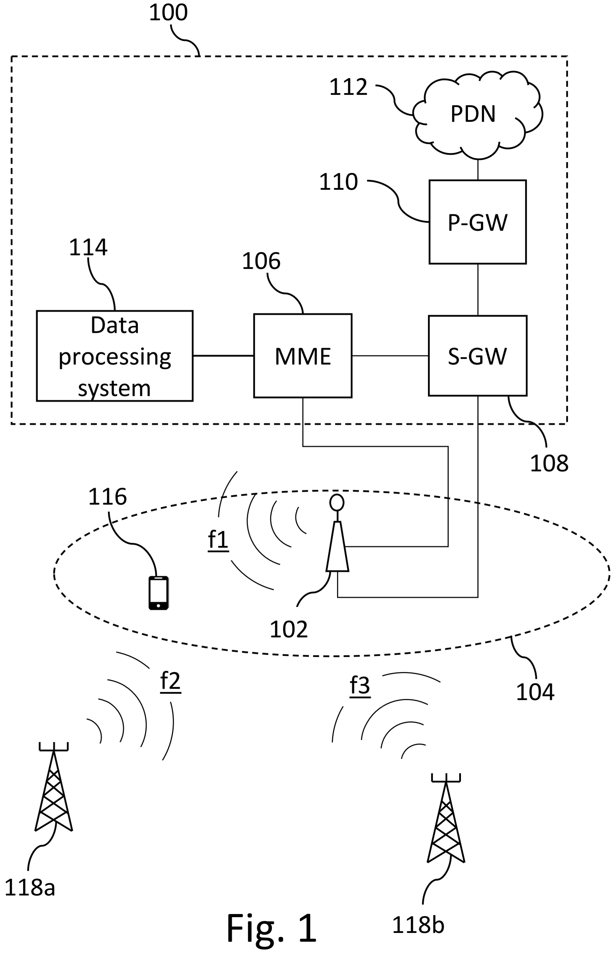

Fig. 1 shows components of a network 100, which in this example is a first PLMN associated with a globally unique PLMN code. The network 100 is arranged to provide telecommunication services within a particular geographical region. The geographical region may for example be a region containing a premises or facility where there is marginal or no cellular coverage by national telecommunication providers (also known as a "not spot"), in which case the network 100 may be known colloquially as an "island network. In this example, the network 100 is configured in accordance with the LTE telecommunication standard.

The components of the network 100 include an LTE base station apparatus (referred to as an Evolved Node B, eNodeBs or eNB 102) arranged to transmit a downlink signal in a first frequency band f1. The eNB 102 may be a microcell eNB with a power of less than 1W (for example, 0.25W) and a range in the order of tens or hundreds of metres, or the eNB 102 may be a higher power eNB with a range in the order of kilometres. A region of coverage 104, or cell, of the the eNB 102 is approximately enclosed by the dashed ellipse. The eNB 102 in this example is the sole base station of the network 100, though in other examples a network may include multiple base stations or eNBs, for example to cover a larger geographical region.

The eNB 102 is connected to other components or nodes of the network 100 including a mobility Management Entity (MME) 106, a Serving Gateway (S-GW) 108, and a Packet Data Network Gateway (P-GW) 110 of an Evolved Packet Core (EPC), all of which may be configured to facilitate to provide data services via a public data network (PDN) 112. The MME 106 is connected to, or alternatively comprises, a data processing system 114. The MME 106 and/or the data processing system 114 may be configured or programmed to perform methods as descried below.

The eNB 102 is arranged to transmit a first downlink signal on a first carrier. The carrier may be associated with a given frequency band, which may have a central frequency (such as 1000MHz, 1500MHz, 1800MHz, etc.) and a bandwidth (for example 1MHz, 3.3MHz, 20MHz). The frequency band may be designated by an absolute radio frequency channel number (ARFCN) or an E-UTRAN ARFCN (EARFCN). The frequency band may correspond to, or fall within, a portion of spectrum for which the operator of the network 100 has obtained a licence.

In accordance with the LTE specification, the first downlink signal may include a set of broadcast control signals within physical resource blocks (PRBs) as allocated by the eNB 102. The broadcast control signals include a primary synchronisation (PSS), a secondary synchronisation signal (SSS), and a physical broadcast channel (PBCH). The PSS and SSS are synchronisation signals that may allow a mobile communication device or user equipment (UE), such as UE 116, to discover and synchronise with the eNB 102 and to determine a physical cell identifier (PCI) associated with the eNB102. The UE 116 may decode the PBCH to obtain a Master Information Block (MIB). The downlink signal may further include system information messages including SIB1, SIB3 and SIB5/6. SIB1 includes SIB mapping information to enable the UE 116 to determine in which PRBs to find SIB3 and SIB5/6. SIB 1 may further indicate the network 100 by a globally unique PLMN code consisting of a MCC (Mobile Country Code) and MNC (Mobile Network Code).

In this example, the operator of the network 100 may wish to know whether any PLMNs different from the first PLMN are available within the region of coverage 104 of the eNB 102. In this example, two base stations 118a, 118b are located outside the region of coverage 104 of the eNB 102, but it is possible that the regions of coverage of at least one of the base stations 118a, 118b overlaps with the region of coverage 104 of the eNB 102, such that the corresponding PLMN(s) are available at some points within at least a subregion of the region of coverage 104. The two base stations 118a, 118b may operate in frequency bands f2, f3, which may be different from the first frequency band f1. The eNB 102 may be outside the region of coverage of either of the two base stations 118a, 118b, meaning that downlink signals transmitted by the base stations 118a, 118b may not be detectable at the location of the eNB 102. The base stations 118a, 118b may be base stations of a common PLMN or two different PLMNs, and may be eNBs configured in accordance with the LTE standard, or may operate in accordance with a different radio access technology (RAT).

The operator of the network 100 may wish to assess the availability of PLMNs different to the network 100 for a number of reasons, such as to enable the operator to establish, and/or obtain evidence, that there is unused spectrum in a given frequency band, in which case the operator may be entitled to licence the spectrum within this band according to spectrum sharing protocols, for example via a LAL if the first PLMN is in the UK. For example, if it is established that there is unused spectrum with a frequency directly above or below the first frequency band f1, then the operator may be able to increase the bandwidth of the frequency band f1, for example to enable additional services to be provided and/or to increase network capacity. Other reasons for assessing the availability of PLMNs different from the network 100 will be discussed hereinafter.

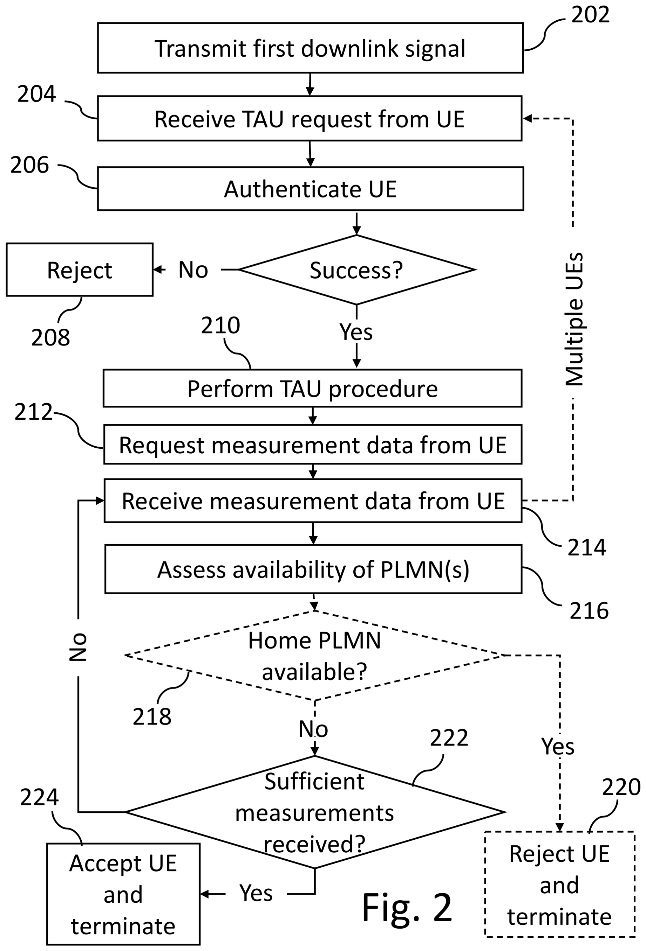

As shown in Fig. 2, a method of assessing the availability of PLMNs in the region of coverage 104 of eNB 102 may include bringing up a carrier in the first frequency band f1 and using the carrier to transmit, at 202, the first downlink signal conveying system information indicating the first PLMN.

In the present example, the UE 116 is initially in Radio Resource Control (RRC) Idle mode. When in Idle mode, the UE 116 may not actively transmit or receive data, and the radio interface of the UE 116 may be in a low-power mode to conserve battery life. When in Idle mode, the UE 116 will typically measure "high priority" cells, and will start measuring "low priority" inter-frequency and inter-RAT cells if the UE 116 determines that the signal level of the serving cell falls below a threshold value, namely when sSrxlevServing < sNonIntraSearch, where sNonIntraSearch is a threshold value typically specified in SIB-3 messages from the serving cell. The signal level of a cell for this purpose may be quantified using Srxlev, which is derived from reference signal received power (RSRP) values of downlink signals in accordance with various parameters as described in 3GPP TS 36.304 section 5.2.3.2.

When in Idle mode, the UE 116 may move into the coverage region of the eNB 102. The UE 116 may then determine that cell reselection criteria are satisfied as specified in 3GPP TS 36.304 sections 5.2.4.5 and 5.2.4.6. The specific cell resection criteria which apply depend on whether the first frequency band (and associated RAT) has a higher, lower, or equal reselection priority compared with the frequency band (and associated RAT) of the currently serving cell. In any case, the UE 116 can only perform a cell reselection if the UE 116 measures the signal level of the eNB 102 to be greater than a certain threshold value (which can be derived from system information transmitted by the serving cell, and may depend on the RSRP of the serving cell).

In this example, the UE 116 moves into the coverage region of the eNB 102, determines that the relevant cell reselection criteria are satisfied, and decodes the system information within the first downlink signal to determine the PLMN code for the first PLMN. Because the PLMN code (and therefore the tracking area identity - TAI) is different from that of the PLMN to which the UE 116 is currently registered, the UE 116 transmits a tracking area update (TAU) request to the eNB 102 over a dedicated channel established between the UE 116 and the eNB 102. In other examples, the TAU may be triggered by other events, for example one of the events listed in 3GPP TS 123 401, V8.15.0 clause 5.3.3.0, or when a UE-defined Discontinuous Reception (DRX) cycle is updated.

The eNB 102 may receive, at 204, the TAU request from the UE 116, and transmit a corresponding TAU request message to the MME 108. In response to receiving the TAU request message from the eNB 102, the MME 108 may optionally authenticate, at 206, the UE 116 with the home network of the UE 116. The authentication may advantageously be performed in accordance with the Diameter protocol, though it will be appreciated that other protocols such as MAP or SEPP may be used in certain circumstances. In the event of the authentication being unsuccessful, the MME 106 may reject, at 208, the tracking update request and the method may terminate.

In the event of the authentication being completed successfully, the method may continue with performing, at a TAU procedure in accordance with 3GPP TS 123 401, V8.15.0 clause 5.3.3.1 or 5.3.3.2. The TAU procedure involves an exchange of messages between the MME 106, the S-GW 108, the old MME (to which the UE 116 is registered prior to the TAU procedure), and the home subscriber server (HSS), and ends with the MME 106 transmitting a TAU accept message to the UE 116 via the eNB 102, and optionally the UE 116 transmitting a TAU complete message back to the MME 106. Following the TAU procedure, the network 100 may provide telecommunication services to the UE 116.

During and/or after the TAU procedure, the network 100 (specifically, the E-UTRAN under the control of the MME 106) may transmit, at 212, one or more messages to the UE 116 to cause the UE 116 to report measurements of one or more networks. For example, the network 100 may transmit a neighbour list indicating one or more frequency bands associated with known PLMNs, and/or frequency bands immediately above and/or below the first frequency band, and/or any other frequency bands of interest. The frequency bands may for example be designated by an ARFCN or EARFCN, which may be included in the neighbour list. The neighbour list may be transmitted within a SIB-5 message. It is to be noted that the neighbour list within the SIB-5 message is usually transmitted by a serving cell for the purpose of evaluating cell reselection criteria in the event of a possible inter-frequency cell reselection or handover from the serving cell, but is here repurposed to facilitate network surveying as will be explained in more detail hereinafter. Accordingly, at least some of the frequency bands indicated in the neighbour list may correspond to PLMNs that the UE 102 would not normally measure.

The network 100 may further transmit an RRC connection reconfiguration message to the UE 116. This message may include a measurement configuration instructing the UE 116 to perform measurements of the frequency bands indicated in the neighbour list, as well as a reporting configuration indicating criteria for the UE 116 to transmit measurement reports to the network 100. In particular, measurement reports may be transmitted periodically and/or in response to specific events as set out in TS 136 331 V9.16.0 clause 5.5.4. The RRC connection reconfiguration message may further specify a period or gap between successive measurements being taken and/or successive measurement reports being transmitted in the event that measurement reports are transmitted periodically. The UE 116 may optionally send an RRC connection reconfiguration complete response to the network 100.

Upon receiving the RRC connection reconfiguration message, the UE 116 may begin taking measurements of the frequency bands indicated in the neighbour list, and when the reporting criteria are fulfilled, the UE 116 may transmit a measurement report to the network 100. The measurement report may include measurement data indicating evaluations of signal strength and/or other metrics in respect of the frequency bands indicated in the neighbour list. The measurement report may also include the cell ID of any cell detected within the frequency bands. In this way, the measurement report may be indicative of reception, by the UE 116, of downlink signals within the indicated frequency bands. The network 100 may receive, at 214, the measurement report from the UE 116.

In some examples, such as when the reporting configuration indicates that measurement reports are to be transmitted periodically, the UE 116 may provide the network 100 with measurement data indicative of reception of downlink signals in the frequency bands over a period of time, such as the entire period in which the UE 116 is camping on the network 100 or for a fixed duration of time. Over the period of time, the user of the UE 116 may move around the coverage area 104, meaning that the measurement data will include samples from different points within the coverage area 104. Furthermore, the network 100 may carry the procedure of steps 204-214 for multiple UEs within the region of coverage 104 of the eNB 102 (or the combined region of coverage of multiple ENBs in the event that the network comprises multiple eNBs). By collecting measurement data from a large number of UEs, potentially over a prolonged period of time, it is expected that measurement data will be collected from a large proportion of the coverage region 104 (to the extent that the coverage region 104 is accessible to the users of the UEs). The measurement data determined from one or more UEs may be stored in a database accessible to the data processing system 114.

The method may continue with the data processing system 114 using the stored measurement data to assess, at 216, the availability of one or more PLMNs in the region of coverage 104 of the eNB 102. The assessment may be carried out using measurement data obtained during a fixed timeframe (for example over a predetermined number of hours or days), or may be carried out when certain criteria are satisfied, such as when measurement data has been obtained from a predetermined number of UEs. Alternatively, the assessment may be ongoing and updated continually when new measurement data is received. In examples where the first PLMN has multiple base stations, separate measurement data may be collected for each base station of the first PLMN. Separate assessments may be carried out for each base station and/or a combined assessment may be carried out to determine the availability of one or more PLMNs in the combined region of coverage of the first PLMN.

In the event that the received measurement data indicates that no downlink signals are detected within one of the indicated frequency bands (for example corresponding to a known PLMN), or if any downlink signal detected within that frequency band has less than a threshold signal level, then it may be determined that no PLMN transmitting in that frequency band is available in the region of coverage 104 of the eNB 102. This determination may provide evidence that unused spectrum is available in the region of coverage 104, for example to be provided in a request or application for a spectrum sharing licence. The degree of confidence in such a determination may depend on the duration of the reporting period and/or the number of UEs from which measurement data was obtained during the reporting period.

Other actions may be taken in response to a determination of nonavailability of PLMNs in the region of coverage 104 of the eNB 102. For example, the operator of the network 100 may decide to increase the transmission power of the cell, either by increasing the transmission power of the eNB 102 or by replacing an antenna of the eNB 102 with a more powerful antenna. By performing a similar assessment at the higher transmission power (and potentially other transmission powers, for example at incrementally increasing steps), the operator of the network 100 may determine that the PLMN is unavailable over a wider geographical region, potentially enabling spectrum sharing within a larger cell within the indicated frequency band. Conversely, if a downlink signal is detected in a given frequency band, then the operator of the network 100 may incrementally reduce the cell power and repeat the assessment until no downlink signals are detected (or are detected with less than a threshold signal level), which may still enable spectrum sharing in the given frequency band, albeit over a smaller geographical region. By performing the network surveying method at varying transmission powers, a more granular picture of the availability of PLMNs in the region of coverage can be built up.

The outcome of the assessment based on the measurement data may optionally be displayed to a user of the data processing system 114, for example in response to a user request or automatically when the assessment is deemed to be complete. The outcome may be presented in the form of a report or table indicating, for each frequency band measured, the ARFCN or EARFCN and/or frequencies of the frequency bands, the identity of a known PLMN associated with the frequency band, an indication of whether a downlink signal was detected in the frequency band, and/or information on any detected downlink signals, such as the fraction of UEs which detected the downlink signal in the measurement period, and statistics such as maximum value or average of the signal level and/or other signal metrics. Such a report, indicating that the known PLMNs are not available in the region of coverage 104 of the eNB 102 (or the combined region of coverage of the first PLMN) may be used to support a request for spectrum sharing, for example to increase the bandwidth of the first frequency band.

The above method of surveying networks using measurement data received from the UE 116 can be used for purposes other than spectrum sharing. In some cases, the method may additionally or alternatively be used to mitigate interference by the network 100 with the home network of the UE 116, thereby to enabling the network 100 to coexist peacefully with other networks in its vicinity whose region of coverage may overlap with the region of coverage 104. For this purpose, the home network of the UE 116 may be determined from the International Mobile Subscriber Identity (IMSI) of the UE 116, which is received during the TAU process (either directly within the TAU request or retrieved from a Temporary Mobile Subscriber Identity - TMSI - provided within the TAU request). The neighbour list may be updated to include the ARFCN or EARFCN of the home network of the UE 116, if this isn't already included.

The method may determine, at 218, whether the measurement data indicates that the home network of the UE 116 is available. If the measurement data indicates that the home network of the UE 116 is available, then the network 100 may reject the UE 116 (as shown by optional step 220 in Fig. 2) and terminate the procedure in relation to the UE 116. In this way, unwanted interference by the network 100 with the operation of the home network can be mitigated or prevented, enabling the network 100 to coexist peacefully with the home network. Rejecting the UE 116 may include transmitting a suitable layer three message such as a "roaming not allowed" or "congestion" message. Alternatively, terminating the registration may include transmitting a layer two message.

If the measurement data indicates that the home network of the UE 116 is not available (or if the optional step of checking for the home network is omitted), then the method may determine, at 222, whether sufficient measurements have been received (either from the UE 116 individually or in total) as compared to a predetermined threshold or other stopping criteria. If sufficient measurements have been received, then the procedure in relation to the UE 116 may be terminated (with the UE 116 accepted to the network) at 224. Terminating the procedure may include transmitting an RRC connection reconfiguration message to the UE 116 indicating that measurements of frequency bands in the neighbour list no longer need to be taken, and/or no longer recording measurement data from the UE 116. If sufficient measurements have not been received, then the method may return to 214 and continue to receive measurement data from the UE 116.

The above embodiments are to be understood as illustrative examples of the invention. Further embodiments of the invention are envisaged. For example, although the description above refers to the LTE standard, those skilled in the art will appreciate that the techniques may equally be applied for other Radio Access Technologies (RATs). For example, the network 100 may instead be a GSM network, in which case the eNB 102 may be replaced with a base station controller (BSC) and base transceiver station (BTS), the MME 106 may be replaced with a mobile subscriber centre (MSC), and the TAU would be a location area update (LAU). Similar variations can be made for other RATs, such as 5G.

The methods described above may be used to determine statistical information on the availability of PLMNs in a given region. For example, if a downlink signal from a given PLMN is detected by a fraction of UEs entering the region of coverage 104, then this fraction may provide an indication of the extent to which the given PLMN is available within the region of coverage 104. In other examples, the locations of the individual UEs may be determined or estimated, for example using measurement data as described in international patent publication WO 2018/046958 A1, in which case the availability of a given PLMN can be mapped within a given geographical region. This may enable more granular understanding of networks operating in the region, which may be used to facilitate more efficient spectrum sharing.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system comprising:
a base station apparatus arranged to transmit a first downlink signal in a first frequency band, the first downlink signal conveying system information indicating a first public land mobile network (PLMN); and
a network node communicatively coupled to the base station apparatus and arranged to perform operations comprising:
receiving, via the base station apparatus, an area update request from a mobile communication device;
performing an area update procedure to register the mobile communication device with the first PLMN;
transmitting, to the mobile communication device via the base station apparatus, one or more messages to cause the mobile communication device to provide measurement data indicative of reception, by the mobile communication device, of one or more downlink signals within one or more frequency bands different to the first frequency band;
receiving, from the mobile communication device via the base station apparatus, the measurement data; and
a data processing system communicatively coupled to the network node and arranged to assess, using the received measurement data, availability of one or more PLMNs different from the first PLMN in a region of coverage of the base station apparatus.

2. The system of claim 1, wherein the operations comprise:
responsive to the data processing system determining that a home network of the mobile communication device is available in the region of coverage of the base station apparatus, terminating the registration of the mobile communication device with the first PLMN.

3. The system of claim 2, wherein terminating the registration comprises transmitting a layer two message and/or a layer three message to the mobile communication device via the base station apparatus.

4. The system of any preceding claim, the operations further comprising receiving, from each of a plurality of further mobile communication devices via the base station apparatus, respective further measurement data indicative of reception, by each of the plurality of further mobile communication devices, of downlink signals within the indicated one or more frequency bands,
wherein the assessing of the availability of the one or more PLMNs different from the first PLMN further uses the respective measurement data from each of the plurality of further mobile communication devices.

5. The system of any preceding claim, wherein:
the operations comprise causing the mobile communication device to transmit a plurality of measurement reports over a period of time during which the mobile communication device is registered with the first PLMN; and
the measurement data is derived from the plurality of measurement reports.

6. The system of any preceding claim, wherein the data processing system is arranged to generate a report indicative of the availability of the one or more PLMNs different from the first PLMN in the region of coverage of the base station apparatus.

7. The system of any preceding claim, wherein the mobile communication device is in an idle state prior to transmitting the area update request.

8. The system of any preceding claim, wherein the network node is configured to transmit the one or more messages to mobile communication device during the area update procedure.

9. The system of any preceding claim, wherein performing the area update procedure comprises authenticating the mobile communication device with the home network of the mobile communication device.

10. The system of any preceding claim, wherein the base station apparatus is an eNodeB configured in accordance with the Long-Term Evolution (LTE) standard, the network node comprises a mobility management entity (MME), and the area update procedure is a tracking area update (TAU) procedure.

11. The system of any preceding claim, wherein the one or more messages include one or more of:
a system information block (SIB)-5 message comprising a neighbour list indicating the one or more frequency bands; or
a Radio Resource Control (RRC) reconfiguration message requesting the measurement data.

12. A method comprising:
transmitting, via a base station apparatus, a first downlink signal in a first frequency band, the first downlink signal conveying system conveying system information indicating a first PLMN;
receiving, via the base station apparatus, an area update request from a mobile communication device;
performing an area update procedure to register the mobile communication device with the first PLMN;
transmitting, to the mobile communication device via the base station apparatus, one or more messages to cause the mobile communication device to provide measurement data indicative of reception, by the mobile communication device, of one or more downlink signals within one or more frequency bands different to the first frequency band;
receiving, from the mobile communication device via the base station apparatus, the measurement data; and
assessing, using the received measurement data, availability of one or more PLMNs different from the first PLMN in a region of coverage of the base station apparatus.

13. The method of claim 12, comprising adjusting a transmission power of the base station apparatus in dependence on an outcome of the assessment.

14. The method of claim 12 or claim 13, comprising increasing a bandwidth of the first frequency band in dependence on an outcome of the assessment.

15. A computer program product comprising instructions which, when executed by a computing system communicatively coupled to a base station apparatus, cause the computing system to carry out the method of any of claims 12 to 14.
